# EUROPEAN PATENT SPECIFICATION

(11) **EP 1 970 285 B1**
(45) Date of publication and mention of the grant of the patent: **28.11.2012**
(21) Application number: 08102687.4
(22) Date of filing: 17.03.2008
(51) Int. Cl.: B62B 7/14, B62B 9/12

(54) **Stroller with a child seat**
Kinderwagen mit einem Kindersitz
Poussette avec siège enfant

(30) Priority: 15.03.2007 EP 07104255
(43) Date of publication of application: 17.09.2008
(73) Proprietor: Team-Tex, 38230 Charvieu (FR)
(72) Inventor: van der Vegt, Herman, 3512LL, UTRECHT (NL)
(74) Representative: Uittenbogaart, Gustaaf Adolf

(56) References cited:
- DE-U1-202006 012 430
- US-A- 5 527 096
- US-A- 5 865 447

## Description

The invention concerns a stroller with a child seat according to claim 1. A stroller of this kind is known, for instance from EP 0827890. The disadvantage of the known stroller is that the child seat can tilt to all inclination angles independent of the type of child seat that is mounted on the undercarriage. The bracket is suitable for tilting a child seat suitable for older children for instance over 60 degrees. Tilting a baby seat over this angle might lead to dangerous situations which is undesirable.

In order to overcome this disadvantage the stroller is according to claim 1. The child seats that are coupled on the bracket can activate the sensor pin. If a child seat moves the sensor pin to the second position the tilting angle of the bracket can be positioned at one angle, for instance if the child seat is a carry cot, or at two angles if the child seat is a baby seat. If the child seat is for older children the child seat does not move the sensor pin to the second position and the child seat can be tilted to all available angles.

In accordance with an embodiment the stroller is according to claim 2. In this way it is ensured that a child seat for which the bracket has to be in a predetermined inclination angle can only be coupled to the bracket if the bracket is in that predetermined inclination angle.

In accordance with an embodiment the stroller is according to claim 3. In this way the bracket is supported in a stable way whereby the undercarriage can be folded without having to adjust the bracket.

The invention is hereafter explained with reference to one or more exemplary embodiments with the aid of a drawing. In the drawing
Figure 1 shows a perspective view of a stroller comprising an undercarriage on which a child seat is mounted,
Figure 2 shows a schematic section of a first embodiment of a bracket connecting the undercarriage and the child seat,
Figure 3 shows a top view of the bracket of figure 2,
Figure 4 shows a bottom view of the child seat at the location where the bracket of figure 2 is attached,
Figure 5 shows a detail of figure 2,
Figure 6 shows a partial cross section of the bracket of figure 2,
Figure 7 shows a schematic view of a second embodiment of the bracket of figure 2 in two positions of the child seat,
Figure 8 shows a schematic view of a further embodiment of a bracket in two positions of the child seat,
Figure 9 shows a schematic view of a further embodiment of a bracket in two positions of the child seat,
Figure 10 shows a side view of a further embodiment of a bracket with a mechanism for limiting the tilting of the bracket in dependence of the properties of the child seat,
Figure 11 shows a perspective view of a bracket according to a further embodiment with a mechanism for controlling the possible tilt angles for various child seats,
Figure 12 shows a section of the bracket of figure 11,
Figure 13 shows a partial section of the bracket of figure 11 a fixed tilting angle, and
Figure 14 shows a partial section of the bracket of figure 11 at a setting whereby the child seat can be tilted to all available tilting angles.

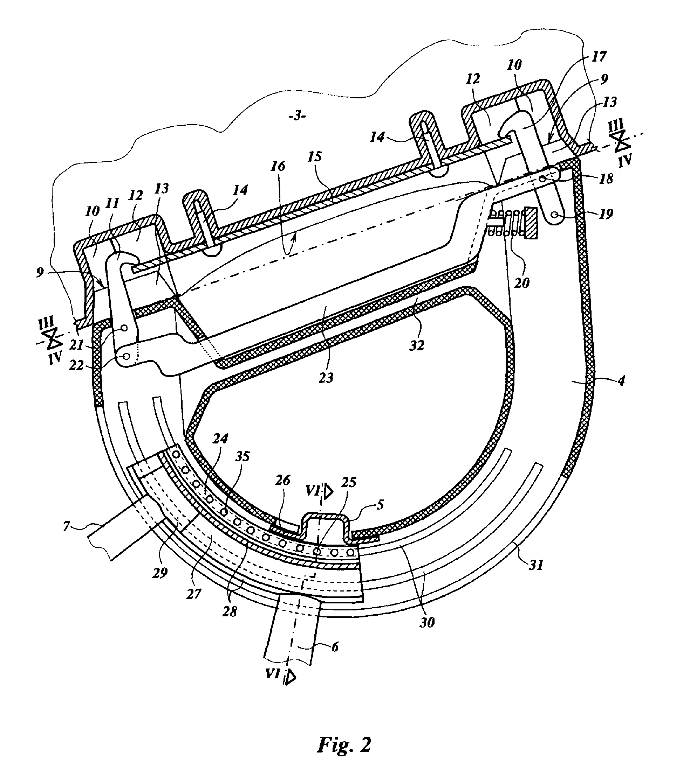

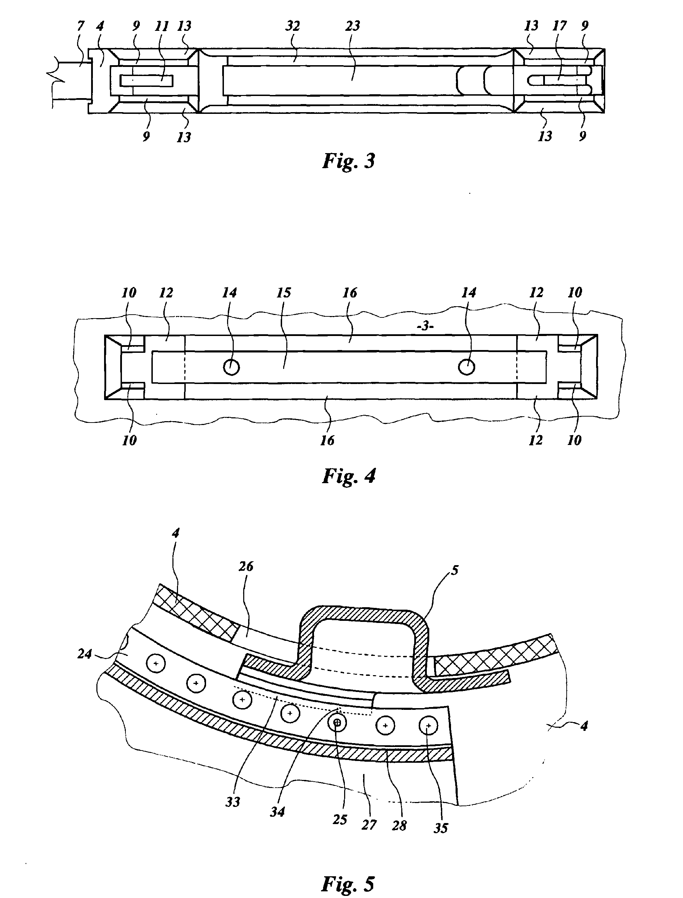

The embodiments of the brackets described in figures 2-9 are not part of the invention but [No underliving] useful for understanding and illustrating the invention

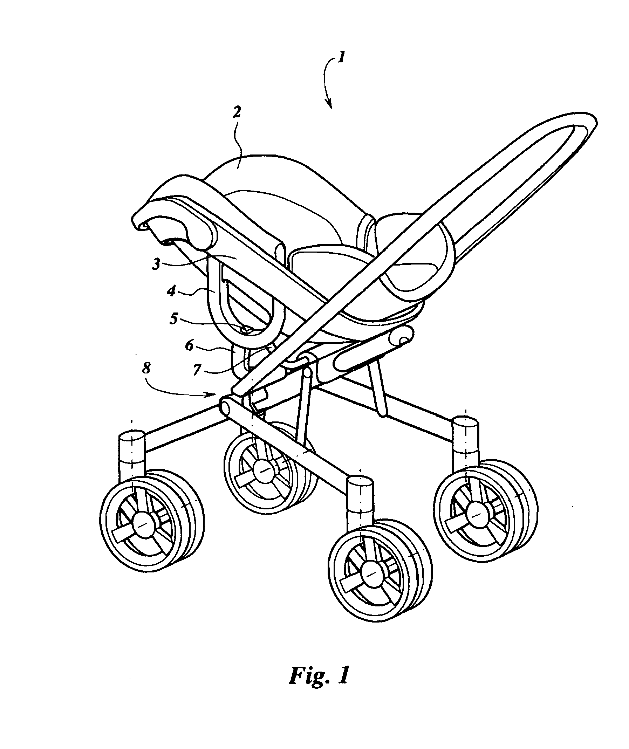

Figure 1 shows a stroller 1 with an undercarriage 8 and a child seat 2 connected thereto. For coupling the child seat 2 has a support 3 that is coupled to the undercarriage 8 by a coupling bracket 4. In this embodiment the coupling bracket 4 is coupled by a first support bar 6 and a second support bar 7 to the undercarriage 8. For enabling tilting the child seat 2 the coupling bracket 4 has a release button 5 which is described more extensively later.

Figures 2, 4, 5 and 6 show a first illustrative embodiment of the coupling bracket 4 and its connection to the support 3 of the child seat 2. The coupling bracket 4 is U - shaped and the ends of the legs of the U rest against the support 3. The distance between the legs where they are connected to the support 3 is at least 80 mm. For positioning the coupling bracket 4 relative to the support 3 the support 3 has two cavities 12 on each side of the child seat 2, which cavities 12 are shaped such that they narrowly enclose cams 13 which are on the ends of the legs of the coupling brackets 4. The cams 13, which have tapered sides to ease the positioning of the support 3 on the coupling bracket 4, have a crest 9 against which a brace 10 of the cavity 12 rests when the support 3 is coupled to the coupling bracket 4. Between the cavities 12 the underside of the support 3 forms a grip 16. In a groove of the grip 16 a metal plate 15 is fastened with screws 14 to the underside of the support 3. The ends of the metal plate 15 extend in the cavities 12. At the end of a leg of the coupling bracket 4 a first hook 11 extends upwards between the two cams 13 and can hook around the first end of the metal plate 15 and at the end of the other leg of the coupling bracket 4 a second hook 17 extends upwards between the two cams 13 and can hook around the other end of the metal plate 15.

For maintaining an accurate position of the legs of the coupling bracket 4 they are connected by a connecting bar 32. There is a considerable distance between these legs so that there also is a considerable distance between the positions where the support 3 is connected to the coupling bracket 4 so that after coupling the hooks 11 and 17 around the metal plate 15 possible play between the support 3 and the coupling bracket 4 or the hooks 11 and 17 and the metal plate 15 does not lead to undesired movements of the child seat 2.

The first hook 11 can rotate around a swivel pin 21 and is activated by a activating bar 23 which connects to the first hook 11 with a coupling pin 22. The second hook 17 can rotate around a swivel pin 19 and is coupled to the activating bar 23 with a coupling pin 18. The coupling pins 18 and 22 and the swivel pins 19 and 21 are located such that with movement of the activating bar 23 the first hook 11 and the second hook 17 counter rotate. The activating bar 23 is pushed by a spring 20 in a direction so that the activating bar 23 pushes the upper ends of the first hook 11 and the second hook 17 towards the metal plate 15.

For mounting the child seat 2 on the coupling bracket 4 the support 3 is positioned with its cavities 12 above the cams 13 and moved towards the coupling bracket 4. The cams 13 position the support 3 accurately relative to the coupling bracket 4. The metal plate 15 touches the top of the first hook 11 and the top of the second hook 17 and due to the shapes of the hooks 11 and 17 pushes the hooks outwards against the force of the spring 20 until they snap around the metal plate 15 and hold the brace 10 of the support 3 against the crest 9 of the coupling bracket 4. For dismounting the child seat 2 from the coupling bracket 4 a hand is placed around each grip 16 and the activating bar 23 is pushed against the force of the spring 20 and the first hook 11 and the second hook 17 move outwards and the child seat 2 can be lifted off.

For swivelling the child seat 2 around a horizontal axis relative to the undercarriage 8 (see figure 1) the coupling bracket 4 is provided with a first rail 30 along which a first arcuate slide 27 can move along an arcuate path. The radius of this arcuate path is at least half the distance between the cavities 12 and preferably more than 50 mm so that when swivelling the arcuate slide 27 has to travel a considerable distance and play between the arcuate slide 27 and the rail 30 does not lead to undesired movement of the child seat 2. The first support bar 6 is connected to the first arcuate slide 27 and can rotate relative the coupling bracket 4 around the center of the arcuate path and thereby moves in an opening 31 of the outer circumference 4 of the coupling bracket 4.

For maintaining the child seat 2 in a desired swivel angle the first arcuate slide 27 has a plate 24 with holes 35 in which a catch 25 can be pushed so that the position of the first arcuate slide 27 is locked. The catch 25 has a pointed end that is pushed by a spring 37 in one of the holes 35 of the plate 24. For retracting the catch 25 out of the hole 35 the catch 25 has a retraction pin 34 which slides along a sloped surface 33 of the release button 5. By moving the release button 5 sideways in an opening 26 against a spring (not shown) the sloped surface 33 moves along the retraction pin 34 and pushes the catch 25 against the force of the spring 37 out of the hole 35 so that the first arcuate slide 27 can be moved along the rail 30 and the child seat 2 can be swivelled around a rotation axis formed by the centers of the arcuate paths of both coupling brackets 4.

A second arcuate slide 29 is in the first arcuate slide 27 and can move along a second rail 28. The second support bar 7 is connected to the second arcuate slide 29 and extends through an opening in the first arcuate slide 27 and the opening 31 in the coupling bracket 4. This makes a relative movement of the first support bar 6 and the second support bar 7 possible, which is for instance necessary when folding the undercarriage 8.

In the shown embodiment the first hook 11 and the second hook 17 couple to the metal plate 15 which is part of the support 3. In another embodiment the metal plate 15 is replaced by pins around which the hooks 11 and 17 can couple in a similar way. Also the embodiment shows an arcuate slide 27 moving inside a C - shaped housing with inside the housing rail 30. It is clear that other rail/slide constructions are possible, for instance whereby the arcuate slide surrounds a tube bent in a radius.

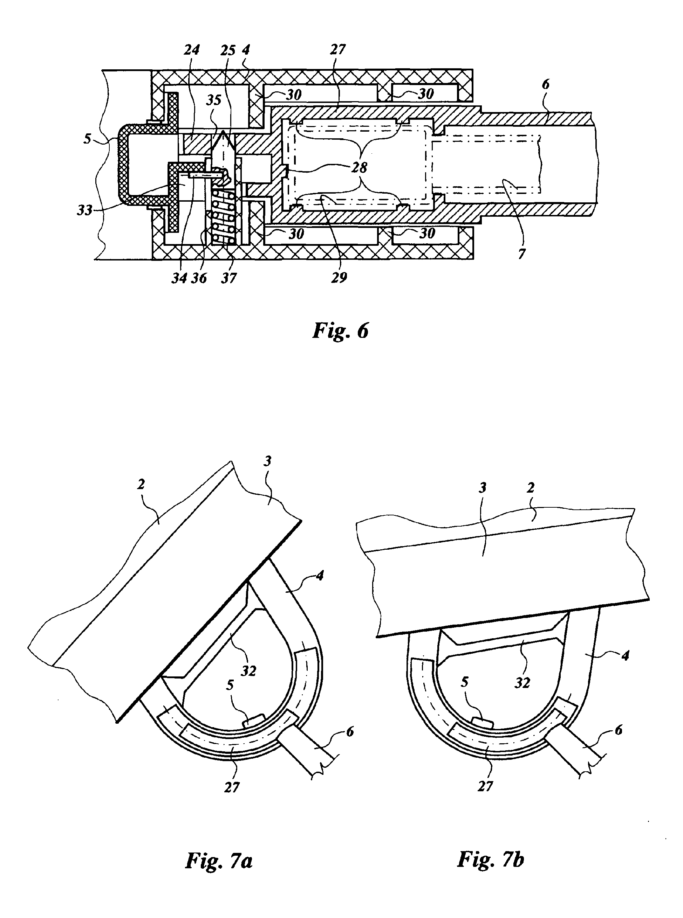

Figure 7a shows a second illustrative embodiment of the coupling bracket 4 whereby the coupling bracket 4 is connected with only the first support bar 6 to the undercarriage. In the shown embodiment the first support bar 6 is connected to the end of the first arcuate slide 27, in other embodiments it is possible that the first support bar 6 is connected to the middle of the first arcuate slide 27 or any other location of the slide 27. Figure 7a shows the situation whereby the support 3 with the child seat 2 is severely inclined, figure 7b shows the situation whereby the support 3 with the child seat 2 of figure 7a is more or less horizontal.

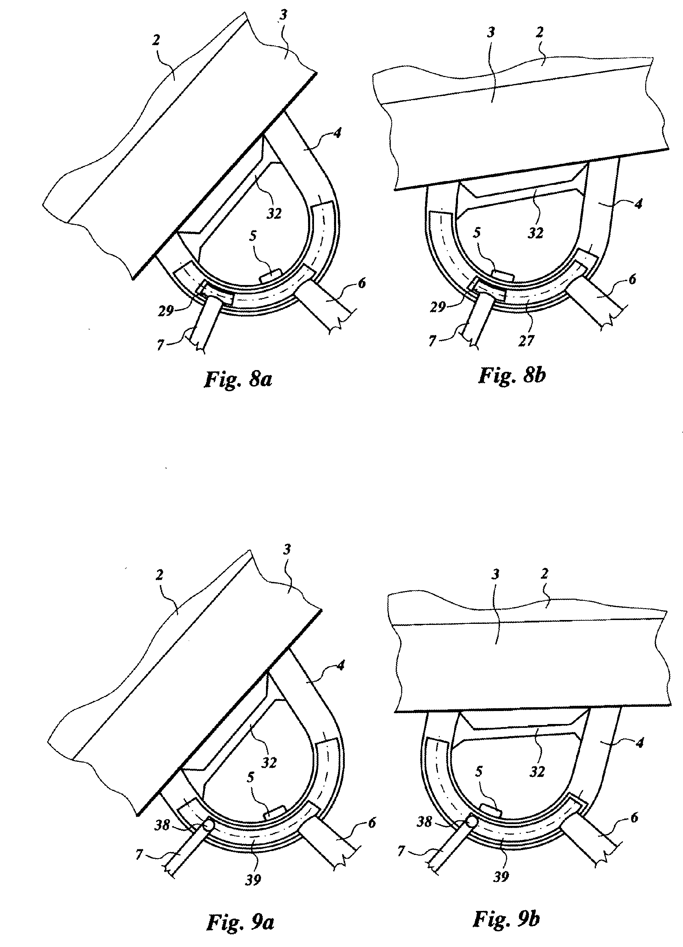

Figure 8a shows a further illustrative embodiment of the coupling bracket 4 which is similar to the coupling bracket 4 described in the figures 2 - 6, whereby the coupling bracket 4 is connected by the first support bar 6 and the second support bar 7 to the undercarriage 8. In figure 8a the support 3 and the child seat 2 are severely inclined, figure 8b shows the situation whereby the support 3 of figure 8a with the child seat is more or less horizontal.

Figure 9a shows a further illustrative embodiment of the coupling bracket 4 whereby the coupling bracket 4 is connected by the first support bar 6 and the second support bar 7 to the undercarriage 8. The first support bar 6 is fastened to one end of an arcuate slide 39 and the second support bar 7 is connected to a pivot 38 at the other end of the arcuate slide 39. In this way the arcuate slide 39 is firmly supported by the first support bar 6 and the second support bar 7 which can rotate relative one another in an easy way.

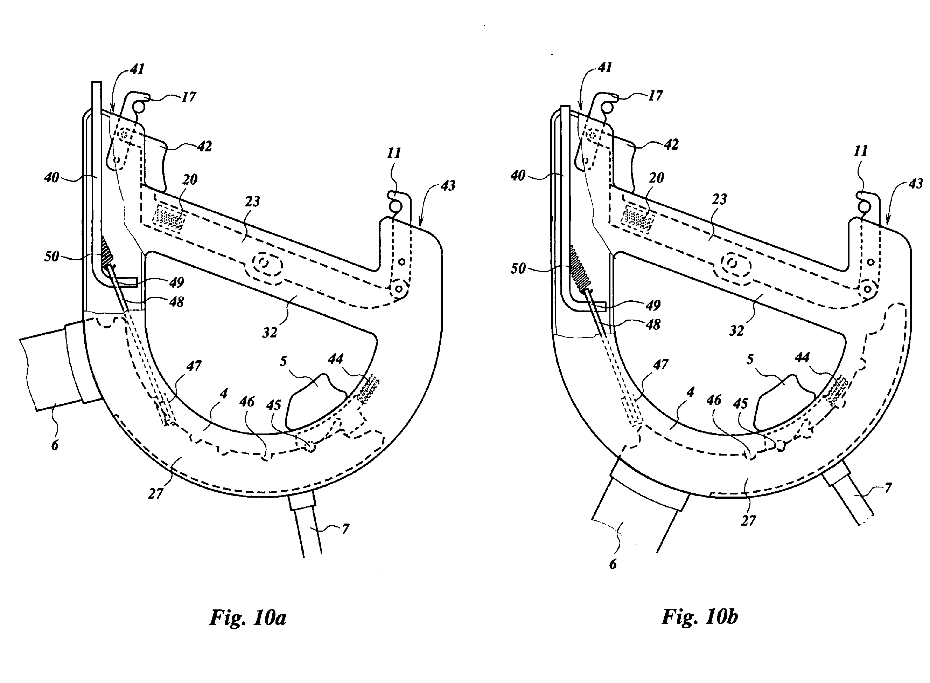

Figure 10a shows a further embodiment of the bracket 4 whereby a child seat is supported by a first coupling surface 43 and a second coupling surface 41. The first coupling surface 43 and the second coupling surface 41 form a flat plane. The first hook 11 extends above the first coupling surface 41 and the second hook 17 extends above the first coupling surface 43. The movements of the first hook 11 and the second hook 17 are coupled by the connecting bar 23 which is moved by activating a button 42. The bracket 4 has a C-shaped body in which the first arcuate slide 27 can move as described earlier. In this embodiment the arcuate slide 27 is provided with notches 46 in which a pin 45 can be moved by a spring 44 so that the arcuate slide 27 is locked in a position. By moving the release button 5 the arcuate slide 27 can slide in the bracket 4.

The movement of the arcuate slide 27 can be blocked by a locking plate 48 as is shown in figure 10b. This locking plate 48 can slide in a guide slot 47 inside the bracket 4. The locking plate 48 has an opening through which a pin 40 extends so that the movement of the locking plate 48 and the pin 40 are coupled. The pin 40 extends above the second coupling surface 41 and can be pushed downwards against a force of a spring 50. This pushing downwards is desirable when the child seat 2 that is placed on the bracket 4 is for instance a carry cot and it is desirable to prevent tilting. The spring loaded metal pin 40 extends above the second coupling surface 41 and is pushed downwards by the carry cot. For other child seats 2 there might be no requirement for limiting the tilting of the child seat 2 and the pin 40 extends into an opening in the child seat 2 and is not pushed downwards. Figure 10a shows this situation and the movement of the arcuate slide 27 is not limited by the locking plate 48.

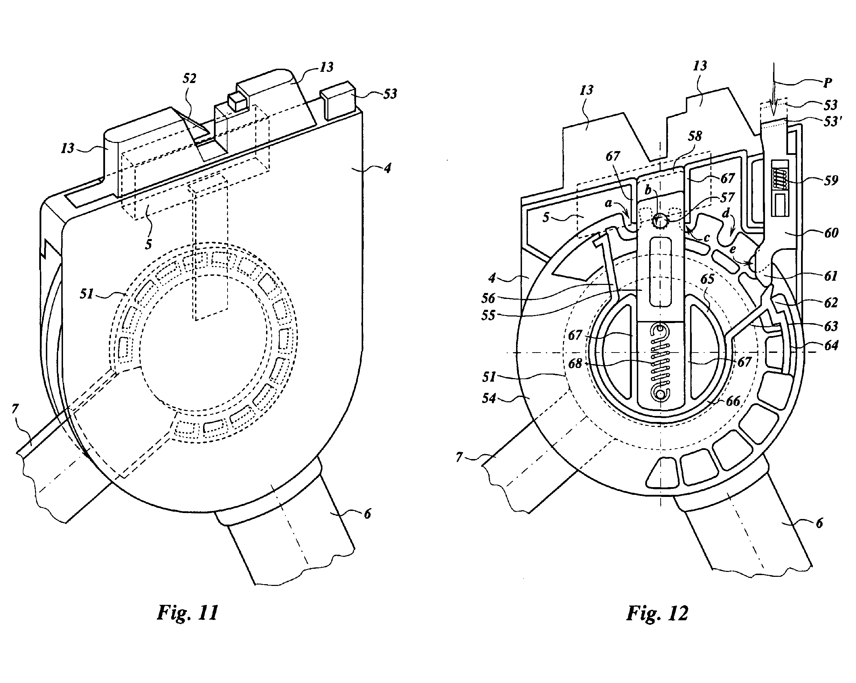

Figures 11 - 14 show a further embodiment of the coupling bracket 4 in various positions of use. In this embodiment the coupling bracket 4 has a closed housing with cams 13 on top. A hook 52 is provided between the cams 13 for coupling and/or locking a child seat on the coupling bracket 4. In the housing is a tilt position disk 54 (see figures 12 - 14) that is connected to the first support bar 6. A ring 51 can rotate in and/or is supported by the tilt position disk 54, the second support bar 7 is connected to the ring 51.

The tilt position disk 54 can rotate with its inner wall 66 around a circular guide 65 and has five fixed rotative positions in the coupling bracket 4 whereby for each position a lock pin 57 is in one of the notches a - e of the tilt position disk 54. The lock pin 57 is mounted in the lock slide 55 that can slide between the lock guides 67. A spring 68 pulls the lock slide 55 towards the center of the tilt position disk 54 so that the lock pin 57 is pulled in one of the notches a - e. A coupling lug 58 couples the release button 5 to the lock slide 55 and by moving the lock slide 55 against the force of the spring 68 with the release button 5 the lock pin 57 is pulled out of one of the notches a - e. The tilt position disk 54 is then free to rotate over a limited angle. The lock slide 55, a first limiting side 56 and a second limiting side 63 of the tilt position disk 54 limit this angle.

The rotation of the tilt position disk 54 can be further limited by a slide 60. A spring 59 pushes the slide 60 upwards so that sensor ridge 53 sticks out above the surface of the coupling bracket 4 and can be pushed downwards in a direction P to an activated position 53' by a child seat mounted on the coupling bracket 4. The slide 60 has a lug 61 that interfaces with a cam 64 or a positioning notch 62 of the tilt position disk 54. In the situation that slide 60 is in the position as shown in figure 12 the lug 61 prevents rotation of the tilt position disk 54 towards the position whereby the lock pin 57 is inserted in notch c, d and e and the lock pin 57 can only move in the notches a and b. The rotative positions of the coupling bracket 4 whereby the lock pin 57 is in the notches a and b are for use of a baby seat on the stroller. The baby seat has a ridge that pushes the sensor ridge 53 to the activated position 53' when placed on the coupling bracket 4 whereby before placing the baby seat on the coupling bracket 4 the tilt position disk 54 must be placed in the correct position (lock pin 57 above notch a or b) so that the sensor ridge 53 can be pushed to the activated position 53'.

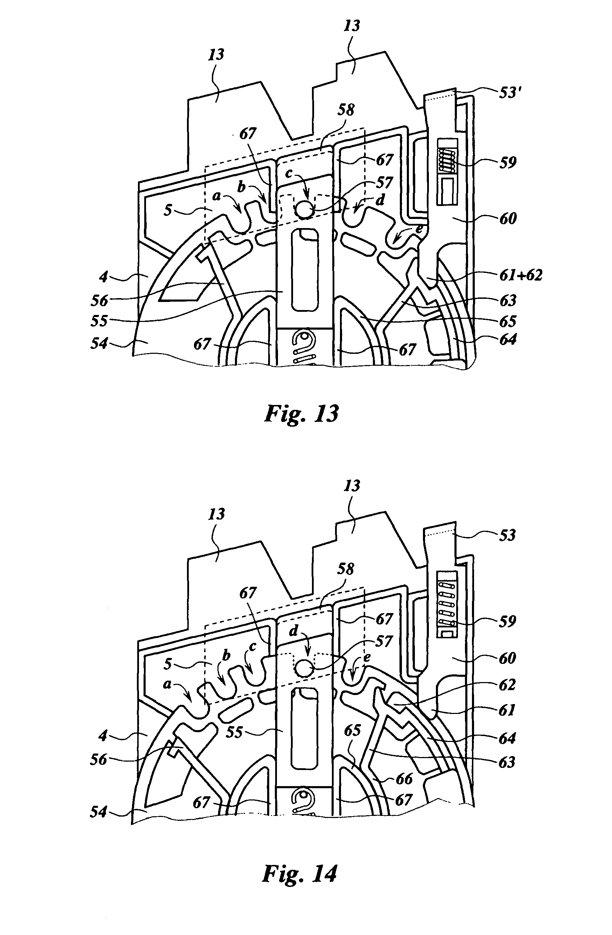

In the situation whereby the tilt position disk 54 is in the rotative position whereby the lock pin 57 is above or in notch c the lug 61 is inserted, when pushed downwards, in a positioning notch 62, see figure 13. In that situation the tilt position disk 54 has a fixed rotative position in the coupling bracket 4 which is suitable for placing a carry cot as child seat, whereby the carry cot also has a ridge that pushes the sensor ridge 53 to the activated position 53'. It will be clear that it is not possible to place the baby seat and the carry cot on the coupling bracket 4 if a cam 64 prevents the downward movement of the slide 60: the sensor ridge 53 that cannot be pushed downward prevents the proper positioning and/or locking of these child seats on the coupling bracket 4. If a child seat, for instance a seat for older children, has no ridge that interacts with the sensor ridge 53 it is possible to place that child seat on the coupling bracket 4 in all rotative positions of the tilt position disk 54. By activating the release button 5 the coupling bracket 4 can then be rotated for positioning the stroller seat in all five angular positions.

## Claims

1. Stroller with a child seat (2) comprising an undercarriage (8) and at each side of the undercarriage a bracket (4) that can be coupled to the child seat whereby the brackets are adjustable to different angles of inclination so that the child seat can be positioned at different angles **characterized in that** at least one bracket (4) has a first arcuate slide (27) or position disk (54) and a sensor pin (40;53) that can be pushed against a force of a spring (50; 59) by a child seat (2) mounted on the undercarriage (8) from a first position to a second position whereby with the sensor pin in the first position (53), the first arcuate slide (27) or position disk (54) can move in the bracket (4) that can be adjusted to all available angles of inclination and with the sensor pin in the second position (53') a locking plate or lug (48, 61) coupled to the sensor pin limits the movement of the first arcuate slide (27) or position disk (54) in the bracket so that it can be adjusted to a limited number of one or more predetermined angles of inclination.

2. Stroller in accordance with claim 1 whereby the
bracket (4) is designed such that the sensor pin cannot move from the first position (53) to the second position (53') unless the bracket is in the limited number of one or more of the predetermined angles of inclination and whereby a first child seat, that is for instance intended for older children, is designed such that it can be coupled to the bracket with the sensor pin in both the first or the second position and a second child seat, that is for instance intended for very young children, is designed such that it can only be coupled to the bracket if the sensor pin can move to the second position.

3. Stroller in accordance with claim 1 or 2 whereby one support bar (6) connects the bracket (4) to the undercarriage (8) at an adjustable angle with the bracket and a second support bar (7) is connected to the bracket at a continuously variable angle with the bracket.

## Patentansprüche

1. Kinderwagen mit einem Kindersitz (2), aufweisend ein Fahrgestell (8) und auf jeder Seite des Fahrgestells einen Bügel (4), welcher mit dem Kindersitz verbunden werden kann, wodurch die Bügel auf verschiedene Neigungswinkel einstellbar sind, so dass der Kindersitz in verschiedenen Winkeln positioniert werden kann, **dadurch gekennzeichnet, dass** mindestens ein Bügel (4) eine erste bogenförmige Führungsschiene (27) oder eine Positionierungsscheibe (54) aufweist, sowie einen Sensorstift (40, 53), der durch einen auf dem Fahrgestell (8) montierten Kindersitz (2) gegen eine Kraft einer Feder (50, 59) von einer ersten Position zu einer zweiten Position gedrückt werden kann, wobei die erste bogenförmige Führungsschiene (27) oder die Positionierungsscheibe (54) sich in dem Bügel (4), der auf alle verfügbaren Neigungswinkel eingestellt werden kann, bewegen kann, wenn der Sensorstift in der ersten Position (53) ist, und eine mit dem Sensorstift verbundene Sicherungsplatte oder ein mit dem Sensorstift verbundener Vorsprung (48, 61) die Bewegung der ersten bogenförmigen Führungsschiene (27) oder der Positionierungsscheibe (54) in dem Bügel begrenzt, so dass er auf eine beschränkte Anzahl von einem oder mehr vorbestimmten Neigungswinkeln eingestellt werden kann, wenn der Sensorstift in der zweiten Position (53') ist.

2. Kinderwagen gemäß Anspruch 1, wobei der Bügel (4) so gestaltet ist, dass der Sensorstift sich nicht von der ersten Position (53) zur zweiten Position (53') bewegen kann, wenn der Bügel sich nicht in einem der beschränkten Anzahl von einem oder mehr der vorbestimmten Neigungswinkel befindet, und wobei ein erster Kindersitz, der beispielsweise für ältere Kinder vorgesehen ist, so gestaltet ist, dass er mit dem Sensorstift in der ersten Position oder mit dem Sensorstift in der zweiten Position mit dem Bügel verbunden werden kann, und ein zweiter Kindersitz, der beispielsweise für sehr junge Kinder vorgesehen ist, so gestaltet ist, dass er nur mit dem Bügel verbunden werden kann, wenn der Sensorstift sich zu der zweiten Position bewegen kann.

3. Kinderwagen gemäß Anspruch 1 oder 2, wobei eine Trägerstange (6) den Bügel (4) mit dem Fahrgestell (8) in einem in Bezug auf den Bügel einstellbaren Winkel verbindet, und eine zweite Trägerstange (7) mit dem Bügel in einem in Bezug auf den Bügel stufenlos veränderbaren Winkel verbunden ist.

## Revendications

1. Poussette avec un siège enfant (2) comprenant un train de roues (8) et de chaque côté du train de roues, un support (4) qui peut être couplé au siège enfant, moyennant quoi les supports sont ajustables selon différents angles d'inclinaison de sorte que le siège enfant peut être positionné à différents angles, **caractérisée en ce qu'**au moins un support (4) a une première glissière arquée (27) ou disque de position (54) et une broche de capteur (40 ; 53) qui peut être poussée contre une force d'un ressort (50 ; 59) par un siège enfant (2) monté sur le train de roues (8), d'une première position à une seconde position, moyennant quoi, avec la broche de capteur dans la première position (53), la première glissière arquée (27) ou disque de position (54) peut se déplacer dans le support (4) qui peut être ajusté à tous les angles d'inclinaison disponibles et avec la broche de capteur dans la seconde position (53'), une plaque ou patte de blocage (48, 61) couplée à la broche de capteur limite le mouvement de la première glissière arquée (27) ou disque de position (54) dans le support de sorte qu'il peut être ajusté à un nombre limité d'un ou plusieurs angles d'inclinaison prédéterminés.

2. Poussette selon la revendication 1, **caractérisée en ce que** le support (4) est conçu de sorte que la broche de capteur ne peut pas passer de la première position (53) à la seconde position (53') à moins que le support ne soit dans le nombre limité d'un ou plusieurs angles d'inclinaison prédéterminés, et **caractérisée en ce qu'**un premier siège d'enfant, qui est par exemple prévu pour des enfants plus âgés, est conçu de sorte qu'il peut se coupler au support avec la broche de capteur à la fois dans la première ou la deuxième position et un second siège d'enfant qui est par exemple prévu pour de très jeunes enfants, est conçu de sorte qu'il peut être uniquement couplé au support si la broche de capteur peut passer dans la seconde position.

3. Poussette selon la revendication 1 ou 2, **caractérisée en ce qu'**une barre de support (6) raccorde le support (4) au train de roues (8) à un angle réglable avec le support et une seconde barre de support (7) est raccordée au support à un angle à variation continue avec le support.
